# EUROPÄISCHE PATENTSCHRIFT

(11) **EP 3 530 917 B1**
(45) Veröffentlichungstag und Bekanntmachung des Hinweises auf die Patenterteilung: **16.09.2026**
(21) Anmeldenummer: 19159013.2
(22) Anmeldetag: 25.02.2019
(51) Int. Cl.: F02D 41/02, F01N 9/00, F02D 41/14, F01N 3/20, F01N 13/00, F02D 41/24, F02D 41/26

(54) **STEUERUNG ZUM AUFHEIZEN VON ABGASREINIGUNGSVORRICHTUNGEN**
CONTROL FOR HEATING EXHAUST GAS PURIFICATION DEVICES
COMMANDE DE CHAUFFAGE DE DISPOSITIFS DE TRAITEMENT DES GAZ D'ÉCHAPPEMENT

(30) Priorität: 27.02.2018 DE 102018104453
(43) Veröffentlichungstag der Anmeldung: 28.08.2019
(73) Patentinhaber: VOLKSWAGEN AKTIENGESELLSCHAFT, 38440 Wolfsburg (DE)
(72) Erfinder: Schröder, Ulrich, 38104 Braunschweig (DE); Tomforde, Michael, 38518 Gifhorn (DE); Dierschke, Christian, 38690 Goslar (DE); Forst, Johannes, 30455 Hannover (DE); Leineweber, Daniel, 38100 Braunschweig (DE)
(74) Vertreter: Bals & Vogel Patentanwälte PartGmbB

(56) Entgegenhaltungen:
- FR-A1- 2 811 370
- US-A1- 2004 206 070
- US-A1- 2005 217 256

## Beschreibung

Die vorliegende Erfindung betrifft ein Verfahren zum Aufheizen einer ersten Abgasreinigungsvorrichtung und einer zweiten Abgasreinigungsvorrichtung eines Abgasstrangs einer Verbrennungskraftmaschine eines Kraftfahrzeugs. Ferner betrifft die Erfindung ein Abgasreinigungssystem zum Reinigen von Abgasen eines Abgasstrangs einer Verbrennungskraftmaschine eines Kraftfahrzeugs sowie ein Kraftfahrzeug mit einem Abgasreinigungssystem.

Moderne Kraftfahrzeuge weisen mindestens eine Abgasreinigungsvorrichtung zum Reinigen von Abgasen eines Abgasstrangs einer Verbrennungskraftmaschine eines Kraftfahrzeugs auf. Es gibt Abgasreinigungsvorrichtungen, die einen Temperaturbereich aufweisen, in welchem eine Abgasreinigung erst möglich oder ein Wirkungsgrad der Abgasreinigung besonders hoch ist. Andere Abgasreinigungsvorrichtungen benötigen regelmäßig eine Temperaturspitze, um beispielsweise gefilterte Reststoffe zu verbrennen. Es gibt daher verschiedene Situationen, die ein Aufheizen bzw. Aufwärmen der Abgasreinigungsvorrichtung erforderlich machen. Die hierzu einzusetzenden Maßnahmen hängen vom gegenwärtigen Betriebszustand der Verbrennungskraftmaschine und der zu erwärmenden Abgasreinigungsvorrichtung ab. Verschiedene Heißmaßnahmen, wie das Heizen über Momentenreserve und das Heizen über Lambda-Split, müssen für jede Abgasreinigungsvorrichtung und unter hohem koordinativen Aufwand dezentral in einer Software abgebildet und von einer Motorsteuerung der Verbrennungskraftmaschine angefordert werden. Gleichwohl können die gleichen Maßnahmen häufig für verschiedene Zwecke eingesetzt und auf diese Weise wiederverwendet werden. Demnach sind Synergien vorhanden, die zur Verbesserung der Übersichtlichkeit der Software, zur Minimierung der Datenmenge und des Applikationsaufwands nutzbar sind.

Aus der DE 101 43 554 A1 und DE 10 2009 045 989 A1 sind Abgasreinigungsvorrichtungen bekannt, welche mittels eines elektronischen Heizelements beheizbar sind. Derartige Abgasreinigungsvorrichtungen haben den Nachteil, dass die elektronischen Heizelemente einen erhöhten Stromverbrauch bewirken und somit eine Batterie des Kraftfahrzeugs besonders belasten. Die Dokumente FR 2 811 370 A1 und US 2004/206070 A1 betreffen verschiedene Abgasreinigungssysteme mit Temperatursensoren zum Messen einer Abgastemperatur im Abgasstrang vor den Abgasreinigungsvorrichtungen. Derartige Abgasreinigungssysteme haben zum Nachteil einen verhältnismäßig hohen Kraftstoffverbrauch zum Reinigen der Abgasreinigungsvorrichtungen.

Es ist daher Aufgabe der vorliegenden Erfindung, die voranstehend beschriebenen Nachteile bei einem Verfahren zum Aufheizen einer ersten Abgasreinigungsvorrichtung und einer zweiten Abgasreinigungsvorrichtung eines Abgasstrangs einer Verbrennungskraftmaschine eines Kraftfahrzeugs, einem Abgasreinigungssystem zum Reinigen von Abgasen eines Abgasstrangs einer Verbrennungskraftmaschine eines Kraftfahrzeugs sowie einem Kraftfahrzeug mit einem Abgasreinigungssystem zu beheben oder zumindest teilweise zu beheben. Insbesondere ist es Aufgabe der vorliegenden Erfindung ein Verfahren, ein Abgasreinigungssystem und ein Kraftfahrzeug zu schaffen, die auf eine einfache und kostengünstige Art und Weise ein effektives Aufheizen der Abgasreinigungsvorrichtungen gewährleisten und eine übermäßige Kommunikation mit einer Motorsteuerungsvorrichtung des Kraftfahrzeugs vermeiden.

Voranstehende Aufgabe wird durch die Patentansprüche gelöst. Demnach wird die Aufgabe durch ein Verfahren zum Aufheizen einer ersten Abgasreinigungsvorrichtung und einer zweiten Abgasreinigungsvorrichtung eines Abgasstrangs einer Verbrennungskraftmaschine eines Kraftfahrzeugs mit den Merkmalen des unabhängigen Anspruchs 1, durch ein Abgasreinigungssystem zum Reinigen von Abgasen eines Abgasstrangs einer Verbrennungskraftmaschine eines Kraftfahrzeugs mit den Merkmalen des nebengeordneten Anspruchs 8 sowie durch ein Kraftfahrzeug mit den Merkmalen des nebengeordneten Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Abgasreinigungssystem sowie dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Verfahren zum Aufheizen einer ersten Abgasreinigungsvorrichtung und einer zweiten Abgasreinigungsvorrichtung eines Abgasstrangs einer Verbrennungskraftmaschine eines Kraftfahrzeugs gelöst. Das Verfahren weist die folgenden Schritte auf:
- Ermitteln einer ersten IST-Temperatur der ersten Abgasreinigungsvorrichtung mittels einer ersten Temperaturmessvorrichtung über Berührung an einer Stelle, an welcher eine Temperatur für den Betrieb der ersten Abgasreinigungsvorrichtung relevant ist,
- Ermitteln einer zweiten IST-Temperatur der zweiten Abgasreinigungsvorrichtung mittels einer zweiten Temperaturmessvorrichtung über Berührung an einer Stelle, an welcher eine Temperatur für den Betrieb der zweiten Abgasreinigungsvorrichtung relevant ist,
- Bestimmen einer ersten SOLL-Temperatur der ersten Abgasreinigungsvorrichtung sowie einer zweiten SOLL-Temperatur der zweiten Abgasreinigungsvorrichtung mittels einer Heizkoordinationsvorrichtung,
- Bestimmen eines ersten Wärmebedarfs der ersten Abgasreinigungsvorrichtung unter Bildung einer Differenz der ersten SOLL-Temperatur und der gemessenen ersten IST-Temperatur sowie eines zweiten Wärmebedarfs der zweiten Abgasreinigungsvorrichtung unter Bildung einer Differenz der zweiten SOLL-Temperatur und der gemessenen zweiten IST-Temperatur mittels der Heizkoordinationsvorrichtung, wobei das Bestimmen des ersten Wärmebedarfs und des zweiten Wärmebedarfs unter Berücksichtigung zusätzlicher Wärmeverluste durch Konvektion und/oder von Leistungsmerkmalen der Verbrennungskraftmaschine, um einen Wärmebedarf zu bestimmen, welcher im Rahmen der technischen Möglichkeiten der Verbrennungskraftmaschine realisierbar ist, zur Bereitstellung von Abgaswärme erfolgt,
- Erstellen einer Heizvorgabe für die erste Abgasreinigungsvorrichtung und für die zweite Abgasreinigungsvorrichtung in Abhängigkeit des ersten Wärmebedarfs der ersten Abgasreinigungsvorrichtung und des zweiten Wärmebedarfs der zweiten Abgasreinigungsvorrichtung mittels der Heizkoordinationsvorrichtung, wobei die Heizvorgabe eine SOLL-Temperatur oder einen SOLL-Temperaturverlauf des Abgases der Verbrennungskraftmaschine definiert,
- Weiterleiten der Heizvorgabe an eine Motorsteuerungsvorrichtung des Kraftfahrzeugs zum Steuern der Verbrennungskraftmaschine des Kraftfahrzeugs durch die Heizkoordinationsvorrichtung, und
- Steuern der Verbrennungskraftmaschine mittels der Motorsteuerungsvorrichtung in Abhängigkeit der Heizvorgabe zum Aufheizen der ersten Abgasreinigungsvorrichtung und der zweiten Abgasreinigungsvorrichtung.

Mittels der ersten Temperaturbestimmungsvorrichtung oder der ersten Temperaturmessvorrichtung wird die erste IST-Temperatur der ersten Abgasreinigungsvorrichtung und mittels der zweiten Temperaturbestimmungsvorrichtung oder der zweiten Temperaturmessvorrichtung die zweite IST-Temperatur der zweiten Abgasreinigungsvorrichtung ermittelt. Das Bestimmen der Temperatur kann beispielsweise mittels einer die erste Temperaturbestimmungsvorrichtung und/oder die zweite Temperaturbestimmungsvorrichtung aufweisenden Motorsteuerungsvorrichtung durch Berechnung erfolgen. Das Messen der Temperatur kann beispielsweise berührend oder berührungslos erfolgen. Die jeweilige IST-Temperatur wird vorzugsweise direkt an einer Stelle gemessen, an welcher die Temperatur für den Betrieb der jeweiligen Abgasreinigungsvorrichtung relevant ist. Alternativ kann die IST-Temperatur an einer anderen Stelle gemessen und über bekannte Wärmepfade der jeweiligen Abgasreinigungsvorrichtung und deren Wärmeleiteigenschaften bestimmt bzw. berechnet werden. Das Bestimmen der IST-Temperaturen erfolgt vorzugsweise kontinuierlich oder zumindest wiederholt, vorzugsweise in definierten Abständen bzw. unter Einhaltung von maximal zulässigen Zeitintervallen, um einen möglichst genauen Verlauf der IST-Temperaturen zu ermitteln. Auf diese Weise ist beispielsweise ein Fortschritt der Erfüllung einer Heizvorgabe genau bestimmbar.

Mittels der Heizkoordinationsvorrichtung werden die erste SOLL-Temperatur der ersten Abgasreinigungsvorrichtung und die zweite SOLL-Temperatur der zweiten Abgasreinigungsvorrichtung bestimmt. Die SOLL-Temperaturen können beispielsweise in einer Datenbank auf einer Speichereinheit des Kraftfahrzeugs abgelegt sein. Dabei kann vorgesehen sein, dass die SOLL-Temperaturen in Abhängigkeit von Abgaszusammensetzungen und/oder Abgasdrücken oder dergleichen vordefiniert sind. Die SOLL-Temperatur einer als Katalysator ausgebildeten Abgasreinigungsvorrichtung beschreibt beispielsweise eine Temperatur, bei welcher eine Umwandlung von NOx in NO₂ optimiert ist. Die SOLL-Temperatur einer als Partikelfilter ausgebildeten Abgasreinigungsvorrichtung beschreibt beispielsweise eine Temperatur, bei welcher eine Verbrennung von gefilterten Partikeln zum Reinigen des Partikelfilters optimiert ist. Unter einer Optimierung wird in diesem Zusammenhang ein Zustand bezeichnet, welcher sowohl einer Funktionalität der jeweiligen Abgasreinigungsvorrichtung als auch einem bestimmungsgemäßen Betrieb der Verbrennungskraftmaschine Rechnung trägt.

Ferner werden mittels der Heizkoordinationsvorrichtung der erste Wärmebedarf der ersten Abgasreinigungsvorrichtung und der zweite Wärmebedarf der zweiten Abgasreinigungsvorrichtung bestimmt. Der jeweilige Wärmebedarf ergibt sich im Wesentlichen aus einer Differenz der SOLL-Temperatur und der gemessenen IST-Temperatur. Für den Fall, dass die IST-Temperatur die SOLL-Temperatur übersteigt, besteht an der jeweiligen Abgasreinigungsvorrichtung kein Wärmebedarf. Zusätzliche Wärmeverluste durch Konvektion, werden bei der Bestimmung bzw. Kalkulation des Wärmebedarfs vorzugsweise mit berücksichtigt. Der Wärmebedarf ist ein Maß dafür, wieviel Wärme der jeweiligen Abgasreinigungsvorrichtung zuzuführen ist, um die SOLL-Temperatur zu erreichen. Leistungsmerkmale der Verbrennungskraftmaschine zur Bereitstellung von Abgaswärme werden bei der Bestimmung des Wärmebedarfs vorzugsweise ebenfalls berücksichtigt, um einen Wärmebedarf zu bestimmen, welcher im Rahmen der technischen Möglichkeiten der Verbrennungskraftmaschine auch realisierbar ist. Im Rahmen der Erfindung kann die Heizvorgabe anhand vorbestimmter Kennzahlen bzw. Kennfelder festgelegt sein, welche den Wärmebedarf berücksichtigen, sodass die Heizvorgabe direkt aus der IST-Temperatur ableitbar ist.

Die Heizkoordinationsvorrichtung erstellt im Anschluss eine Heizvorgabe für die erste Abgasreinigungsvorrichtung und für die zweite Abgasreinigungsvorrichtung. Die Heizvorgabe wird in Abhängigkeit des ersten Wärmebedarfs der ersten Abgasreinigungsvorrichtung und des zweiten Wärmebedarfs der zweiten Abgasreinigungsvorrichtung erstellt. Bei vorhandenen Kennzahlen oder Kennfeldern kann die Heizvorgabe auch direkt anhand der ermittelten IST-Temperatur aus diesen abgeleitet werden. Die Heizvorgabe kann als eine Anweisung an die Verbrennungskraftmaschine zur definierten Bereitstellung von Abgaswärme verstanden werden und ist vorzugsweise auf die technischen Eigenschaften der Verbrennungskraftmaschine abgestimmt, sodass die Heizvorgabe im Bereich der technischen Realisierbarkeit der Verbrennungskraftmaschine liegt. Die Heizvorgabe kann beispielsweise eine SOLL-Temperatur oder einen SOLL-Temperaturverlauf des Abgases der Verbrennungskraftmaschine definieren. Dabei kann vorgesehen sein, dass die Heizvorgabe eine Temperaturuntergrenze vorgibt, sodass ein Überschreiten dieser Temperaturuntergrenze durch das Abgas einer Erfüllung der Heizvorgabe nicht entgegensteht.

Anschließend leitet die Heizkoordinationsvorrichtung die Heizvorgabe an die Motorsteuerungsvorrichtung des Kraftfahrzeugs weiter. Die Motorsteuerungsvorrichtung ist zum Steuern der Verbrennungskraftmaschine des Kraftfahrzeugs ausgebildet. Das Weiterleiten erfolgt vorzugsweise über eine hierfür ausgebildete Datenschnittstelle, insbesondere über ein Kabel. Alternativ können die Heizkoordinationsvorrichtung und die Motorsteuerungsvorrichtung zu einer gemeinsamen Einheit zusammengefasst sein, sodass das Weiterleiten beispielsweise über eine gemeinsame Platine oder ein Bus-System erfolgen kann.

Schließlich steuert die Motorsteuerungsvorrichtung die Verbrennungskraftmaschine in Abhängigkeit der Heizvorgabe zum Aufheizen der ersten Abgasreinigungsvorrichtung und der zweiten Abgasreinigungsvorrichtung. Mit anderen Worten kann erfindungsgemäß vorgesehen sein, dass die Steuerungsvorrichtung die Verbrennungskraftmaschine bereits zum Antreiben des Kraftfahrzeugs steuert. Das Abgas der Verbrennungskraftmaschine weist demnach eine bestimmte Abgastemperatur bzw. einen bestimmten Abgastemperaturverlauf auf. Für den Fall, dass die weitergeleitete Heizvorgabe eine höhere Abgastemperatur verlangt, steuert die Motorsteuerungsvorrichtung die Verbrennungskraftmaschine entsprechend nach, um höhere Abgastemperaturen zu erzielen.

Das Verfahren wird vorzugsweise wiederholt durchgeführt, um stets zu gewährleisten, dass die Abgasreinigungsvorrichtungen unter optimalen Betriebstemperaturen operieren und somit die Reinigung des Abgases besonders effizient durchführen.

Ein erfindungsgemäßes Verfahren zum Aufheizen einer ersten Abgasreinigungsvorrichtung und einer zweiten Abgasreinigungsvorrichtung eines Abgasstrangs einer Verbrennungskraftmaschine eines Kraftfahrzeugs hat gegenüber herkömmlichen Verfahren den Vorteil, dass mit einfachen Mitteln sowie auf eine kostengünstige Art und Weise ein optimierter Betrieb der Abgasreinigungsvorrichtungen gewährleistet ist, wobei durch die Bündelung der einzelnen Wärmebedarfe zu einer gemeinsamen Heizvorgabe ein Betrieb der Motorsteuerungsvorrichtung und somit der Verbrennungskraftmaschine verbessert ist. Die Motorsteuerung kann nunmehr auf eine konkrete Heizvorgabe der Heizkoordinationsvorrichtung die Verbrennungskraftmaschine steuern und muss nicht mehr zwischen einer Vielzahl von Einzelheizvorgaben unterschiedlicher Abgasreinigungsvorrichtungen differenzieren. Zudem hat das Generieren einer gemeinsamen Heizvorgabe durch die Heizkoordinationsvorrichtung den Vorteil, dass die Heizvorgabe den Wärmebedarfen sämtlicher Abgasreinigungsvorrichtungen sowie den technischen Merkmalen der Verbrennungskraftmaschine Rechnung trägt.

Gemäß einer bevorzugten Weiterentwicklung der Erfindung kann bei einem Verfahren vorgesehen sein, dass die Heizvorgabe unter Berücksichtigung eines an der ersten Abgasreinigungsvorrichtung mittels einer ersten Druckmessvorrichtung gemessenen ersten Drucks und/oder eines an der zweiten Abgasreinigungsvorrichtung mittels einer zweiten Druckmessvorrichtung gemessenen zweiten Drucks mittels der Heizkoordinationsvorrichtung erstellt wird. Neben der Temperatur ist der Druck ein Parameter, über welchen ein Funktionieren von Abgasreinigungsvorrichtungen beeinflussbar ist. Ein Druckunterschied an einem Partikelfilter, welcher einen Schwellwert überschreitet kann beispielsweise ein erforderliches Abbrennen von Rückständen im Partikelfilter anzeigen. Durch das Ermitteln von Druck und Temperatur ist somit mit einfachen Mitteln sowie auf eine vorteilhafte Art und Weise eine präzisere Bestimmung des Wärmebedarfs möglich.

Es ist erfindungsgemäß bevorzugt, dass beim Erstellen der Heizvorgabe eine Heizstrategie mittels der Heizkoordinationsvorrichtung auf Basis des ersten Wärmebedarfs und des zweiten Wärmebedarfs aus einer Liste von vordefinierten Heizstrategien ausgewählt wird. Eine Heizstrategie ist im Rahmen der Erfindung ein sequenzieller oder zeitlicher Ablauf der Wärmebereitstellung zum Erfüllen der Heizvorgabe. Um ein Bauteil von einer IST-Temperatur auf eine höhere SOLL-Temperatur aufzuwärmen, sind grundsätzlich viele unterschiedliche Heizstrategien möglich, wie z.B. durch langsames Aufheizen mit moderaten Abgastemperaturen oder schnelles Aufheizen mit höheren Abgastemperaturen. Mittels der Heizkoordinationsvorrichtung wird vorzugsweise eine Heizstrategie aus der Liste ausgewählt, welche den Wärmebedarfen der Gesamtheit der Abgasreinigungsvorrichtungen möglichst gerecht wird, insbesondere unter Berücksichtigung von Synergieeffekten oder dergleichen. Die einzelnen Heizstrategien sind beispielsweise tabellarisch oder grafisch abgelegt. Bei einer tabellarischen Form sind vorzugsweise Abgastemperaturen Heizwärmemengen zugeordnet. Eine Liste der Heizstrategien beinhaltet vorzugsweise eine Mehrzahl von Heizstrategien, sodass die Heizkoordinationsvorrichtung die für einen spezifischen Fall optimale Heizstrategie auswählen kann. Die Heizstrategien sowie die Liste der Heizstrategien sind vorzugsweise auf einer Speichereinheit des Kraftfahrzeugs gespeichert. Die Speichereinheit ist vorzugsweise als Teil der Motorsteuerung oder der Heizkoordinationsvorrichtung ausgebildet.

Weiter bevorzugt wird die ausgewählte Heizstrategie mittels der Heizkoordinationsvorrichtung auf den ersten Wärmebedarf und/oder den zweiten Wärmebedarf modifiziert. Es wird vorzugsweise eine Heizstrategie ausgewählt, welche dem Decken des ersten Wärmebedarfs und des zweiten Wärmebedarfs möglichst gerecht wird. Dabei kann es vorkommen, dass eine ausgewählte Heizstrategie zwar die sinnvollste bzw. beste Heizstrategie aus der Liste der verfügbaren Heizstrategien, aber zum Decken des ersten Wärmebedarfs und/oder des zweiten Wärmebedarfs nicht optimal ist. In diesem Fall ist es vorteilhaft, die ausgewählte Heizstrategie derart zu modifizieren, dass diese besser auf den ersten Wärmebedarf und/oder zweiten Wärmebedarf abgestimmt ist. Dies kann beispielsweise durch Interpolieren erfolgen.

In einer besonders bevorzugten Ausgestaltung des erfindungsgemäßen Verfahrens führt die Heizkoordinationsvorrichtung beim Erstellen der Heizvorgabe eine Priorisierung zwischen dem ersten Wärmebedarf und dem zweiten Wärmebedarf durch. Dies kann insbesondere dann zweckmäßig sein, wenn zwischen dem ersten Wärmebedarf und dem zweiten Wärmebedarf eine Diskrepanz herrscht und das Erreichen einer SOLL-Temperatur einer bestimmten Abgasreinigungsvorrichtung von besonderer Bedeutung ist. Ebenso können auf diese Weise technische Limitationen der Verbrennungskraftmaschine berücksichtigt werden. Mittels einer Priorisierung der Wärmebedarfe ist eine Abgasreinigung der Abgase der Verbrennungskraftmaschine mit einfachen Mitteln sowie auf eine kostengünstige Art und Weise optimierbar.

Vorzugsweise erstellt die Heizkoordinationsvorrichtung die Heizvorgabe derart, dass der erste Wärmebedarf und der zweite Wärmebedarf vollständig gedeckt werden. Bei einer vollständigen Deckung des Wärmebedarfs wird ein optimaler Betrieb der Abgasreinigungsvorrichtungen sichergestellt. Daher sollte es immer das Ziel der Erstellung der Heizvorgabe sein, im Rahmen des technisch Möglichen sowie wirtschaftlich Sinnvollen die Wärmebedarfe möglichst vollständig zu decken, um den Betrieb der Abgasreinigungsvorrichtungen auf diese Weise zu optimieren.

Es ist erfindungsgemäß besonders bevorzugt, dass die erste Abgasreinigungsvorrichtung ein Katalysator und die zweite Abgasreinigungsvorrichtung ein Partikelfilter ist. Der Katalysator ist vorzugsweise zur Umwandlung von Stickoxiden und/oder Kohlenwasserstoffen und/oder Kohlenstoffmonoxid in ungiftige Stoffe, wie z.B. Kohlenstoffdioxid, Wasser und Stickstoff, ausgebildet. Eine SOLL-Temperatur des Katalysators kann beispielsweise um die 500°C betragen. Der Partikelfilter ist beispielsweise als Dieselrußpartikelfilter ausgebildet. Bei Regeneration des Partikelfilters werden die im Partikelfilter gesammelten Rußpartikel verbrannt und somit in Kohlenstoffdioxid umgewandelt. Eine SOLL-Temperatur des Partikelfilters für die Regeneration kann beispielsweise zwischen 500 °C und 550 °C betragen.

Gemäß einem zweiten Aspekt der Erfindung wird die Aufgabe durch ein Abgasreinigungssystem zum Reinigen von Abgasen eines Abgasstrangs einer Verbrennungskraftmaschine eines Kraftfahrzeugs gelöst. Das Abgasreinigungssystem weist eine erste Abgasreinigungsvorrichtung zum Reinigen der Abgase, eine zweite Abgasreinigungsvorrichtung zum Reinigen der Abgase, eine erste Temperaturmessvorrichtung zum Ermitteln einer ersten IST-Temperatur der ersten Abgasreinigungsvorrichtung über Berührung an einer Stelle, an welcher eine Temperatur für den Betrieb der ersten Abgasreinigungsvorrichtung relevant ist, und eine zweite Temperaturmessvorrichtung zum Ermitteln einer zweiten IST-Temperatur der zweiten Abgasreinigungsvorrichtung über Berührung an einer Stelle, an welcher eine Temperatur für den Betrieb der zweiten Abgasreinigungsvorrichtung relevant ist, auf. Erfindungsgemäß weist das Abgasreinigungssystem eine Heizkoordinationsvorrichtung auf. Die Heizkoordinationsvorrichtung ist zum Bestimmen einer ersten SOLL-Temperatur der ersten Abgasreinigungsvorrichtung und einer zweiten SOLL-Temperatur der zweiten Abgasreinigungsvorrichtung, zum Bestimmen eines ersten Wärmebedarfs der ersten Abgasreinigungsvorrichtung unter Bildung einer Differenz der ersten SOLL-Temperatur und der gemessenen ersten IST-Temperatur und eines zweiten Wärmebedarfs der zweiten Abgasreinigungsvorrichtung unter Bildung einer Differenz der ersten SOLL-Temperatur und der gemessenen ersten IST-Temperatur sowie jeweils unter Berücksichtigung zusätzlicher Wärmeverluste durch Konvektion und/oder Leistungsmerkmale der Verbrennungskraftmaschine, um einen Wärmebedarf zu bestimmen, welcher im Rahmen der technischen Möglichkeiten der Verbrennungskraftmaschine realisierbar ist, zum Erstellen einer Heizvorgabe für die erste Abgasreinigungsvorrichtung und für die zweite Abgasreinigungsvorrichtung in Abhängigkeit des ersten Wärmebedarfs der ersten Abgasreinigungsvorrichtung und des zweiten Wärmebedarfs der zweiten Abgasreinigungsvorrichtung, wobei die Heizvorgabe eine SOLL-Temperatur oder einen SOLL-Temperaturverlauf des Abgases des Verbrennungskraftmaschine definiert, sowie zum Weiterleiten der Heizvorgabe an eine Motorsteuerungsvorrichtung zum Steuern der Verbrennungskraftmaschine des Kraftfahrzeugs ausgebildet.

Die erste Temperaturermittlungsvorrichtung und die erste Temperaturmessvorrichtung sind zur Ermittlung der ersten IST-Temperatur der ersten Abgasreinigungsvorrichtung ausgebildet. Die zweite Temperaturermittlungsvorrichtung und die zweite Temperaturmessvorrichtung sind zur Ermittlung der zweiten IST-Temperatur der zweiten Abgasreinigungsvorrichtung ausgebildet. Die erste Temperaturermittlungsvorrichtung und die zweite Temperaturermittlungsvorrichtung sind vorzugsweise zum Empfangen der IST-Temperaturen von einer anderen Einheit, wie z.B. der Motorsteuerungsvorrichtung ausgebildet. Die erste Temperaturmessvorrichtung und die zweite Temperaturmessvorrichtung sind vorzugsweise zum berührenden oder berührungslosen Ermitteln der Temperatur ausgebildet. Überdies sind die erste Temperaturmessvorrichtung und die zweite Temperaturmessvorrichtung vorzugsweise ausgebildet und angeordnet, die jeweilige IST-Temperatur direkt an einer Stelle zu messen, an welcher die Temperatur für den Betrieb der jeweiligen Abgasreinigungsvorrichtung relevant ist. Alternativ kann im Rahmen der Erfindung vorgesehen sein, dass die erste Temperaturmessvorrichtung und die zweite Temperaturmessvorrichtung ausgebildet sind, die jeweilige IST-Temperatur an einer anderen Stelle zu messen.

Die Heizkoordinationsvorrichtung ist vorzugsweise ausgebildet, über bekannte Wärmepfade der jeweiligen Abgasreinigungsvorrichtung und deren Wärmeleiteigenschaften die IST-Temperatur auf Basis der an anderer Stelle gemessenen Temperatur zu bestimmen bzw. zu berechnen. Das Bestimmen kann auch durch Empfangen der Daten von einer Datenquelle erfolgen. Ferner ist die Heizkoordinationsvorrichtung ausgebildet, die erste SOLL-Temperatur der ersten Abgasreinigungsvorrichtung und die zweite SOLL-Temperatur der zweiten Abgasreinigungsvorrichtung zu bestimmen. Hierfür weist das Abgasreinigungssystem vorzugsweise eine Speichervorrichtung auf, in welcher die SOLL-Temperaturen der Abgasreinigungsvorrichtungen abgespeichert sind. Des Weiteren ist die Heizkoordinationsvorrichtung ausgebildet, den ersten Wärmebedarf der ersten Abgasreinigungsvorrichtung und den zweiten Wärmebedarf der zweiten Abgasreinigungsvorrichtung zu bestimmen. Der jeweilige Wärmebedarf ergibt sich im Wesentlichen aus einer Differenz der SOLL-Temperatur und der gemessenen IST-Temperatur. Ferner ist die Heizkoordinationsvorrichtung ausgebildet, die Heizvorgabe für die erste Abgasreinigungsvorrichtung und für die zweite Abgasreinigungsvorrichtung, insbesondere in Abhängigkeit des ersten Wärmebedarfs der ersten Abgasreinigungsvorrichtung und des zweiten Wärmebedarfs der zweiten Abgasreinigungsvorrichtung, zu erstellen. Schließlich ist die Heizkoordinationsvorrichtung ausgebildet, die Heizvorgabe an die Motorsteuerungsvorrichtung der Verbrennungskraftmaschine weiterzuleiten. Hierfür weist das Abgasreinigungssystem vorzugsweise eine geeignete Datenschnittstelle zum Anbinden an die Motorsteuerungsvorrichtung auf.

Die Motorsteuerungsvorrichtung ist zum Steuern der Verbrennungskraftmaschine ausgebildet. Ferner ist die Motorsteuerungsvorrichtung zum Steuern der Verbrennungskraftmaschine in Abhängigkeit der Heizvorgabe zum Aufheizen der ersten Abgasreinigungsvorrichtung und der zweiten Abgasreinigungsvorrichtung ausgebildet. Durch dieses Steuern der Verbrennungskraftmaschine sind Abgastemperaturen gezielt steuerbar und somit die erste Abgasreinigungsvorrichtung sowie die zweite Abgasreinigungsvorrichtung gemäß der Heizvorgabe aufheizbar.

Bei dem beschriebenen Abgasreinigungssystem zum Reinigen von Abgasen eines Abgasstrangs einer Verbrennungskraftmaschine eines Kraftfahrzeugs ergeben sich sämtliche Vorteile, die bereits zu einem Verfahren zum Aufheizen einer ersten Abgasreinigungsvorrichtung und einer zweiten Abgasreinigungsvorrichtung eines Abgasstrangs einer Verbrennungskraftmaschine eines Kraftfahrzeugs gemäß dem ersten Aspekt der Erfindung beschrieben worden sind. Demnach hat das erfindungsgemäße Abgasreinigungssystem gegenüber herkömmlichen Abgasreinigungssystemen den Vorteil, dass mit einfachen Mitteln sowie auf eine kostengünstige Art und Weise ein optimierter Betrieb der Abgasreinigungsvorrichtungen gewährleistet ist, wobei durch die Bündelung der einzelnen Wärmebedarfe zu einer gemeinsamen Heizvorgabe ein Betrieb der Motorsteuerungsvorrichtung und somit der Verbrennungskraftmaschine verbesserbar ist. Die Motorsteuerung kann nunmehr auf eine konkrete Heizvorgabe der Heizkoordinationsvorrichtung die Verbrennungskraftmaschine steuern und muss nicht mehr zwischen einer Vielzahl von Einzelheizvorgaben unterschiedlicher Abgasreinigungsvorrichtungen differenzieren. Zudem hat das Generieren einer gemeinsamen Heizvorgabe durch die Heizkoordinationsvorrichtung den Vorteil, dass die Heizvorgabe den Wärmebedarfen sämtlicher Abgasreinigungsvorrichtungen sowie den technischen Merkmalen der Verbrennungskraftmaschine Rechnung trägt.

Vorzugsweise ist die erste Abgasreinigungsvorrichtung als Katalysator und die zweite Abgasreinigungsvorrichtung als Partikelfilter ausgebildet. Der Katalysator ist vorzugsweise zur Umwandlung von Stickoxiden und/oder Kohlenwasserstoffen und/oder Kohlenstoffmonoxid in ungiftige Stoffe, wie z.B. Kohlenstoffdioxid, Wasser und Stickstoff, ausgebildet. Eine SOLL-Temperatur des Katalysators kann beispielsweise um die 500°C betragen. Der Partikelfilter ist beispielsweise als Ottorußpartikelfilter ausgebildet. Bei Regeneration des Partikelfilters werden die im Partikelfilter gesammelten Rußpartikel verbrannt und somit in Kohlenstoffdioxid umgewandelt. Eine SOLL-Temperatur des Partikelfilters für die Regeneration kann beispielsweise über 550°C betragen. Ein Abgasreinigungssystem mit derartigen Abgasreinigungsvorrichtungen hat den Vorteil, dass wesentliche Schadstoffe aus dem Abgas der Verbrennungskraftmaschine herausfilterbar sind.

Gemäß einem dritten Aspekt der Erfindung wird die Aufgabe durch ein Kraftfahrzeug gelöst. Das Kraftfahrzeug weist eine Verbrennungskraftmaschine und einen an der Verbrennungskraftmaschine angeordneten Abgasstrang auf. Zudem weist das Kraftfahrzeug eine Motorsteuerungsvorrichtung zum Steuern der Verbrennungskraftmaschine auf. Erfindungsgemäß weist das Kraftfahrzeug ein erfindungsgemäßes Abgasreinigungssystem auf, welches am Abgasstrang angeordnet ist. Das Abgasreinigungssystem ist derart am Abgasstrang des Kraftfahrzeugs angeordnet, dass Abgase der Verbrennungskraftmaschine von der ersten Abgasreinigungsvorrichtung sowie der zweiten Abgasreinigungsvorrichtung des Abgasreinigungssystems reinigbar sind. Eine Anordnung am Abgasstrang bedeutet im Rahmen der Erfindung beispielsweise, dass das Abgasreinigungssystem als Teil des Abgasstrangs ausgebildet ist. Einige Komponenten des Abgasreinigungssystems, insbesondere die erste Abgasreinigungsvorrichtung, die zweite Abgasreinigungsvorrichtung und ggf. die Temperaturmessvorrichtungen und/oder Druckmessvorrichtungen, sind vorzugsweise im Abgasstrom angeordnet. Andere Komponenten des Abgasreinigungssystems, wie z. B. die Heizkoordinationsvorrichtung und eine Speichervorrichtung zum Speichern der Heizstrategien und/oder SOLL-Temperaturen, sind vorzugsweise außerhalb des Abgasstroms angeordnet.

Bei dem beschriebenen Kraftfahrzeug ergeben sich sämtliche Vorteile, die bereits zu einem Verfahren zum Aufheizen einer ersten Abgasreinigungsvorrichtung und einer zweiten Abgasreinigungsvorrichtung eines Abgasstrangs einer Verbrennungskraftmaschine eines Kraftfahrzeugs gemäß dem ersten Aspekt der Erfindung sowie einem Abgasreinigungssystem zum Reinigen von Abgasen eines Abgasstrangs einer Verbrennungskraftmaschine eines Kraftfahrzeugs gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise ein optimierter Betrieb der Abgasreinigungsvorrichtungen gewährleistet ist, wobei durch die Bündelung der einzelnen Wärmebedarfe zu einer gemeinsamen Heizvorgabe ein Betrieb der Motorsteuerungsvorrichtung und somit der Verbrennungskraftmaschine verbesserbar ist. Die Motorsteuerung kann nunmehr auf eine konkrete Heizvorgabe der Heizkoordinationsvorrichtung die Verbrennungskraftmaschine steuern und muss nicht mehr zwischen einer Vielzahl von Einzelheizvorgaben unterschiedlicher Abgasreinigungsvorrichtungen differenzieren. Zudem hat das Generieren einer gemeinsamen Heizvorgabe durch die Heizkoordinationsvorrichtung den Vorteil, dass die Heizvorgabe den Wärmebedarfen sämtlicher Abgasreinigungsvorrichtungen sowie den technischen Merkmalen der Verbrennungskraftmaschine Rechnung trägt.

Ein erfindungsgemäßes Verfahren zum Aufheizen einer ersten Abgasreinigungsvorrichtung und einer zweiten Abgasreinigungsvorrichtung eines Abgasstrangs einer Verbrennungskraftmaschine eines Kraftfahrzeugs, ein erfindungsgemäßes Abgasreinigungssystem zum Reinigen von Abgasen eines Abgasstrangs einer Verbrennungskraftmaschine eines Kraftfahrzeugs sowie ein erfindungsgemäßes Kraftfahrzeug werden nachfolgend anhand von Zeichnungen näher erläutert. Es zeigen jeweils schematisch:
- Figur 1: in einer Seitenansicht eine bevorzugte Ausführungsform eines erfindungsgemäßen Abgasreinigungssystems,
- Figur 2: in einer Seitenansicht eine bevorzugte Ausführungsform eines erfindungsgemäßen Kraftfahrzeugs, und
- Figur 3: in einem Ablaufdiagramm eine bevorzugte Ausführungsform eines erfindungsgemäßen Verfahrens.

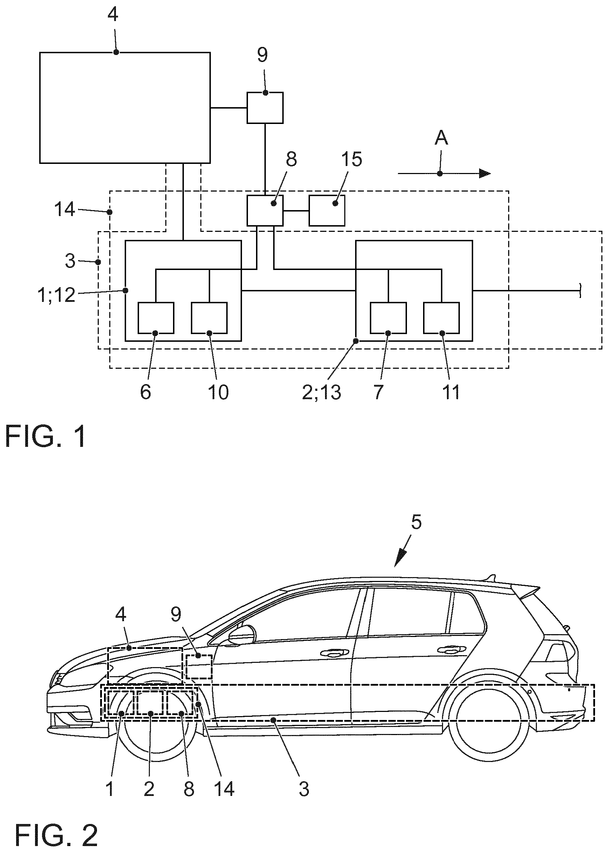

Elemente mit gleicher Funktion und Wirkungsweise sind in den Fig. 1 bis 3 jeweils mit denselben Bezugszeichen versehen.

In Fig. 1 ist eine bevorzugte Ausführungsform eines erfindungsgemäßen Abgasreinigungssystems 14 schematisch in einer Seitenansicht abgebildet. Das Abgasreinigungssystem 14 ist an einem Abgasstrang 3 einer Verbrennungskraftmaschine 4 angeordnet. In Ausstoßrichtung A des Abgasstrangs 3 ist eine erste Abgasreinigungsvorrichtung 1 des Abgasreinigungssystems 14 vor einer zweiten Abgasreinigungsvorrichtung 2 des Abgasreinigungssystems 14 angeordnet. Die erste Abgasreinigungsvorrichtung 1 ist als Katalysator 12 ausgebildet und weist optional eine erste Temperaturmessvorrichtung 6 zum Messen einer ersten IST-Temperatur der ersten Abgasreinigungsvorrichtung 1 sowie eine optionale erste Druckmessvorrichtung 10 zum Messen eines ersten IST-Drucks der ersten Abgasreinigungsvorrichtung 1 auf. Die zweite Abgasreinigungsvorrichtung 2 ist als Partikelfilter 13 ausgebildet und weist optional eine zweite Temperaturmessvorrichtung 7 zum Messen einer zweiten IST-Temperatur der zweiten Abgasreinigungsvorrichtung 2 sowie eine optionale zweite Druckmessvorrichtung 11 zum Messen eines zweiten IST-Drucks der zweiten Abgasreinigungsvorrichtung 2 auf.

Ferner weist das Abgasreinigungssystem 14 eine Heizkoordinationsvorrichtung 8 auf. Die Heizkoordinationsvorrichtung 8 ist zum Bestimmen einer ersten SOLL-Temperatur der ersten Abgasreinigungsvorrichtung 1 sowie zum Bestimmen einer zweiten SOLL-Temperatur der zweiten Abgasreinigungsvorrichtung 2 ausgebildet. Zum Bestimmen der SOLL-Temperaturen ist die Heizkoordinationsvorrichtung 8 mit einer Speichervorrichtung 15 des Abgasreinigungssystems 14 gekoppelt. Des Weiteren ist die Heizkoordinationsvorrichtung 8 zum Bestimmen eines ersten Wärmebedarfs der ersten Abgasreinigungsvorrichtung 1 in Abhängigkeit der ermittelten ersten IST-Temperatur sowie der ersten SOLL-Temperatur sowie zum Bestimmen eines zweiten Wärmebedarfs der zweiten Abgasreinigungsvorrichtung 2 in Abhängigkeit der ermittelten zweiten IST-Temperatur sowie der zweiten SOLL-Temperatur ausgebildet. Schließlich ist die Heizkoordinationsvorrichtung 8 zum Erstellen einer Heizvorgabe für die erste Abgasreinigungsvorrichtung 1 und für die zweite Abgasreinigungsvorrichtung 2 in Abhängigkeit des ersten Wärmebedarfs der ersten Abgasreinigungsvorrichtung 1 und des zweiten Wärmebedarfs der zweiten Abgasreinigungsvorrichtung 2 sowie zum Weiterleiten der Heizvorgabe an eine Motorsteuerungsvorrichtung 9 zum Steuern der Verbrennungskraftmaschine 4 ausgebildet.

In Fig. 2 ist eine bevorzugte Ausführungsform eines erfindungsgemäßen Kraftfahrzeugs 5 schematisch in einer Seitenansicht abgebildet. Das Kraftfahrzeug 5 weist eine Verbrennungskraftmaschine 4 mit einer Motorsteuerungsvorrichtung 9 zum Steuern der Verbrennungskraftmaschine 4 auf. Zum Abführen der Abgase der Verbrennungskraftmaschine 4 weist das Kraftfahrzeug 5 einen Abgasstrang 3 auf. An dem Abgasstrang 3 ist ein erfindungsgemäßes Abgasreinigungssystem 14 mit einer ersten Abgasreinigungsvorrichtung 1 und einer zweiten Abgasreinigungsvorrichtung 2 zum Reinigen des Abgases der Verbrennungskraftmaschine 4 angeordnet. Zum Erstellen und Weiterleiten der Heizvorgabe an die Motorsteuerungsvorrichtung 9 weist das Abgasreinigungssystem 14 eine Heizkoordinationsvorrichtung 8 auf.

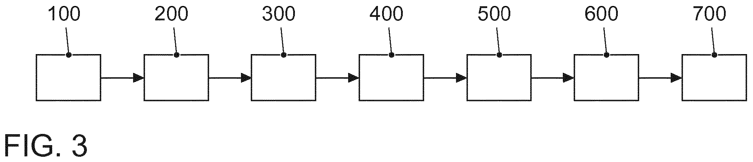

In Fig. 3 ist eine bevorzugte Ausführungsform eines erfindungsgemäßen Verfahrens schematisch in einem Ablaufdiagramm dargestellt. In einem ersten Verfahrensschritt 100 wird mittels der ersten Temperaturmessvorrichtung 6 die erste IST-Temperatur der ersten Abgasreinigungsvorrichtung 1 ermittelt. In einem zweiten Verfahrensschritt 200 wird mittels der zweiten Temperaturmessvorrichtung 7 die zweite IST-Temperatur der zweiten Abgasreinigungsvorrichtung 2 ermittelt. In einem dritten Verfahrensschritt 300 wird mittels der Heizkoordinationsvorrichtung 8 die erste SOLL-Temperatur der ersten Abgasreinigungsvorrichtung 1 sowie die zweite SOLL-Temperatur der zweiten Abgasreinigungsvorrichtung 2 bestimmt. In einem vierten Verfahrensschritt 400 wird mittels der Heizkoordinationsvorrichtung 8 der erste Wärmebedarf der ersten Abgasreinigungsvorrichtung 1 sowie der zweite Wärmebedarf der zweiten Abgasreinigungsvorrichtung 2 bestimmt. In einem fünften Verfahrensschritt 500 wird mittels der Heizkoordinationsvorrichtung 8 die Heizvorgabe für die erste Abgasreinigungsvorrichtung 1 und für die zweite Abgasreinigungsvorrichtung 2 in Abhängigkeit des ersten Wärmebedarfs der ersten Abgasreinigungsvorrichtung 1 und des zweiten Wärmebedarfs der zweiten Abgasreinigungsvorrichtung 2 erstellt. In einem sechsten Verfahrensschritt 600 wird mittels der Heizkoordinationsvorrichtung 8 die Heizvorgabe an die Motorsteuerungsvorrichtung 9 des Kraftfahrzeugs 5 zum Steuern der Verbrennungskraftmaschine 4 des Kraftfahrzeugs 5 übermittelt. In einem siebten Verfahrensschritt 700 wird mittels der Motorsteuerungsvorrichtung 9 die Verbrennungskraftmaschine 4 in Abhängigkeit der Heizvorgabe zum Aufheizen der ersten Abgasreinigungsvorrichtung 1 und der zweiten Abgasreinigungsvorrichtung 2 gesteuert.

### Bezugszeichenliste

- 1: erste Abgasreinigungsvorrichtung
- 2: zweite Abgasreinigungsvorrichtung
- 3: Abgasstrang
- 4: Verbrennungskraftmaschine
- 5: Kraftfahrzeug
- 6: erste Temperaturmessvorrichtung
- 7: zweite Temperaturmessvorrichtung
- 8: Heizkoordinationsvorrichtung
- 9: Motorsteuerungsvorrichtung

- 10: erste Druckmessvorrichtung
- 11: zweite Druckmessvorrichtung
- 12: Katalysator
- 13: Partikelfilter
- 14: Abgasreinigungssystem
- 15: Speichervorrichtung

- 100: erster Verfahrensschritt
- 200: zweiter Verfahrensschritt
- 300: dritter Verfahrensschritt
- 400: vierter Verfahrensschritt
- 500: fünfter Verfahrensschritt
- 600: sechster Verfahrensschritt
- 700: siebter Verfahrensschritt

- A: Ausstoßrichtung

## Patentansprüche

1. Verfahren zum Aufheizen einer ersten Abgasreinigungsvorrichtung (1) und einer zweiten Abgasreinigungsvorrichtung (2) eines Abgasstrangs (3) einer Verbrennungskraftmaschine (4) eines Kraftfahrzeugs (5), aufweisend die folgenden Schritte:
- Ermitteln einer ersten IST-Temperatur der ersten Abgasreinigungsvorrichtung (1) mittels einer ersten Temperaturmessvorrichtung (6) über Berührung an einer Stelle, an welcher eine Temperatur für den Betrieb der ersten Abgasreinigungsvorrichtung (1) relevant ist,
- Ermitteln einer zweiten IST-Temperatur der zweiten Abgasreinigungsvorrichtung (2) mittels einer zweiten Temperaturmessvorrichtung (7) über Berührung an einer Stelle, an welcher eine Temperatur für den Betrieb der zweiten Abgasreinigungsvorrichtung (2) relevant ist,
- Bestimmen einer ersten SOLL-Temperatur der ersten Abgasreinigungsvorrichtung (1) sowie einer zweiten SOLL-Temperatur der zweiten Abgasreinigungsvorrichtung (2) mittels einer Heizkoordinationsvorrichtung (8),
- Bestimmen eines ersten Wärmebedarfs der ersten Abgasreinigungsvorrichtung (1) unter Bildung einer Differenz der ersten SOLL-Temperatur und der gemessenen ersten IST-Temperatur sowie eines zweiten Wärmebedarfs der zweiten Abgasreinigungsvorrichtung (2) unter Bildung einer Differenz der zweiten SOLL-Temperatur und der gemessenen zweiten IST-Temperatur mittels der Heizkoordinationsvorrichtung (8), wobei das Bestimmen des ersten Wärmebedarfs und des zweiten Wärmebedarfs unter Berücksichtigung zusätzlicher Wärmeverluste durch Konvektion und von Leistungsmerkmalen der Verbrennungskraftmaschine (4), um einen Wärmebedarf zu bestimmen, welcher im Rahmen der technischen Möglichkeiten der Verbrennungskraftmaschine realisierbar ist, zur Bereitstellung von Abgaswärme erfolgt,
- Erstellen einer gemeinsamen Heizvorgabe für die erste Abgasreinigungsvorrichtung (1) und für die zweite Abgasreinigungsvorrichtung (2) in Abhängigkeit des ersten Wärmebedarfs der ersten Abgasreinigungsvorrichtung (1) und des zweiten Wärmebedarfs der zweiten Abgasreinigungsvorrichtung (2) mittels der Heizkoordinationsvorrichtung (8), wobei die Heizvorgabe eine SOLL-Temperatur oder einen SOLL-Temperaturverlauf des Abgases der Verbrennungskraftmaschine (4) definiert,
- Weiterleiten der gemeinsamen Heizvorgabe an eine Motorsteuerungsvorrichtung (9) des Kraftfahrzeugs (5) zum Steuern der Verbrennungskraftmaschine (4) des Kraftfahrzeugs (5) mittels der Heizkoordinationsvorrichtung (8), und
- Steuern der Verbrennungskraftmaschine (4) mittels der Motorsteuerungsvorrichtung (9) in Abhängigkeit der gemeinsamen Heizvorgabe zum Aufheizen der ersten Abgasreinigungsvorrichtung (1) und der zweiten Abgasreinigungsvorrichtung (2).

2. Verfahren nach Anspruch 1,
**dadurch gekennzeichnet,**
**dass** die Heizvorgabe unter Berücksichtigung eines an der ersten Abgasreinigungsvorrichtung (1) mittels einer ersten Druckmessvorrichtung (10) gemessenen ersten Drucks und/oder eines an der zweiten Abgasreinigungsvorrichtung (2) mittels einer zweiten Druckmessvorrichtung (11) gemessenen zweiten Drucks mittels der Heizkoordinationsvorrichtung (8) erstellt wird.

3. Verfahren nach Anspruch 1 oder 2,
**dadurch gekennzeichnet,**
**dass** beim Erstellen der Heizvorgabe eine Heizstrategie mittels der Heizkoordinationsvorrichtung (8) auf Basis des ersten Wärmebedarfs und des zweiten Wärmebedarfs aus einer Liste von vordefinierten Heizstrategien ausgewählt wird.

4. Verfahren nach Anspruch 3,
**dadurch gekennzeichnet,**
**dass** die ausgewählte Heizstrategie mittels der Heizkoordinationsvorrichtung (8) auf den ersten Wärmebedarf und/oder den zweiten Wärmebedarf modifiziert wird.

5. Verfahren nach einem der vorangehenden Ansprüche,
**dadurch gekennzeichnet,**
**dass** die Heizkoordinationsvorrichtung (8) beim Erstellen der Heizvorgabe eine Priorisierung zwischen dem ersten Wärmebedarf und dem zweiten Wärmebedarf durchführt.

6. Verfahren nach einem der Ansprüche 1 bis 5,
**dadurch gekennzeichnet,**
**dass** die Heizkoordinationsvorrichtung (8) die Heizvorgabe derart erstellt, dass der erste Wärmebedarf und der zweite Wärmebedarf vollständig gedeckt werden.

7. Verfahren nach einem der vorangehenden Ansprüche,
**dadurch gekennzeichnet,**
**dass** die erste Abgasreinigungsvorrichtung (1) ein Katalysator (12) und die zweite Abgasreinigungsvorrichtung (2) ein Partikelfilter (13) ist.

8. Abgasreinigungssystem (14) zum Reinigen von Abgasen eines Abgasstrangs (3) einer Verbrennungskraftmaschine (4) eines Kraftfahrzeugs (5), aufweisend eine erste Abgasreinigungsvorrichtung (1) zum Reinigen der Abgase, eine zweite Abgasreinigungsvorrichtung (2) zum Reinigen der Abgase, eine erste Temperaturmessvorrichtung (6) zum Ermitteln einer ersten IST-Temperatur der ersten Abgasreinigungsvorrichtung (1) über Berührung an einer Stelle, an welcher eine Temperatur für den Betrieb der ersten Abgasreinigungsvorrichtung (1) relevant ist, und eine zweite Temperaturmessvorrichtung (7) zum Ermitteln einer zweiten IST-Temperatur der zweiten Abgasreinigungsvorrichtung (2) über Berührung an einer Stelle, an welcher eine Temperatur für den Betrieb der zweiten Abgasreinigungsvorrichtung (2) relevant ist, **dadurch gekennzeichnet,**
**dass** das Abgasreinigungssystem (14) eine Heizkoordinationsvorrichtung (8) zum Bestimmen einer ersten SOLL-Temperatur der ersten Abgasreinigungsvorrichtung (1) und einer zweiten SOLL-Temperatur der zweiten Abgasreinigungsvorrichtung (2), zum Bestimmen eines ersten Wärmebedarfs der ersten Abgasreinigungsvorrichtung (1) unter Bildung einer Differenz der ersten SOLL-Temperatur und der gemessenen ersten IST-Temperatur und eines zweiten Wärmebedarfs der zweiten Abgasreinigungsvorrichtung (2) unter Bildung einer Differenz der ersten SOLL-Temperatur und der gemessenen ersten IST-Temperatur sowie jeweils unter Berücksichtigung zusätzlicher Wärmeverluste durch Konvektion und Leistungsmerkmale der Verbrennungskraftmaschine (4), um einen Wärmebedarf zu bestimmen, welcher im Rahmen der technischen Möglichkeiten der Verbrennungskraftmaschine realisierbar ist, zum Erstellen einer gemeinsamen Heizvorgabe für die erste Abgasreinigungsvorrichtung (1) und für die zweite Abgasreinigungsvorrichtung (2) in Abhängigkeit des ersten Wärmebedarfs der ersten Abgasreinigungsvorrichtung (1) und des zweiten Wärmebedarfs der zweiten Abgasreinigungsvorrichtung (2), wobei die
gemeinsame Heizvorgabe eine SOLL-Temperatur oder einen SOLL-Temperaturverlauf des Abgases des Verbrennungskraftmaschine (4) definiert, sowie zum Weiterleiten der gemeinsamen Heizvorgabe an eine Motorsteuerungsvorrichtung (9) zum Steuern der Verbrennungskraftmaschine (4) des Kraftfahrzeugs (5) aufweist.

9. Abgasreinigungssystem (14) nach Anspruch 8,
**dadurch gekennzeichnet,**
**dass** die erste Abgasreinigungsvorrichtung (1) als Katalysator (12) und die zweite Abgasreinigungsvorrichtung (2) als Partikelfilter (13) ausgebildet ist.

10. Kraftfahrzeug (5), aufweisend eine Verbrennungskraftmaschine (4) und einen an der Verbrennungskraftmaschine (4) angeordneten Abgasstrang (3), wobei das Kraftfahrzeug (5) eine Motorsteuerungsvorrichtung (9) zum Steuern der Verbrennungskraftmaschine (4) aufweist,
**dadurch gekennzeichnet,**
**dass** das Kraftfahrzeug (5) ein Abgasreinigungssystem (14) nach Anspruch 8 oder 9 aufweist, welches am Abgasstrang (3) angeordnet ist.

## Claims

1. Method for heating a first exhaust gas purification device (1) and a second exhaust gas purification device (2) of an exhaust tract (3) of an internal combustion engine (4) of a motor vehicle (5), comprising the following steps:
- determining a first actual temperature of the first exhaust gas purification device (1) by means of a first temperature measuring device (6) by way of contact at a point where a temperature is relevant for the operation of the first exhaust gas purification device (1),
- determining a second actual temperature of the second exhaust gas purification device (2) by means of a second temperature measuring device (7) by way of contact at a point where a temperature is relevant for the operation of the second exhaust gas purification device (2),
- ascertaining a first target temperature of the first exhaust gas purification device (1) and a second target temperature of the second exhaust gas purification device (2) by means of a heating coordination device (8),
- ascertaining a first heat demand of the first exhaust gas purification device (1) by calculating the difference between the first target temperature and the measured first actual temperature, and a second heat demand of the second exhaust gas purification device (2) by calculating the difference between the second target temperature and the measured second actual temperature by means of the heating coordination device (8), wherein the first heat demand and the second heat demand are ascertained taking into account additional heat losses due to convection and performance characteristics of the internal combustion engine (4) in order to ascertain a heat demand which is achievable within the technical capabilities of the internal combustion engine for the provision of exhaust gas heat,
- creating a common heating specification for the first exhaust gas purification device (1) and for the second exhaust gas purification device (2) on the basis of the first heat demand of the first exhaust gas purification device (1) and the second heat demand of the second exhaust gas purification device (2) by means of the heating coordination device (8), wherein the heating specification defines a target temperature or a target temperature profile of the exhaust gas of the internal combustion engine (4),
- forwarding the common heating specification to an engine control device (9) of the motor vehicle (5) to control the internal combustion engine (4) of the motor vehicle (5) by means of the heating coordination device (8), and
- controlling the internal combustion engine (4) by means of the engine control device (9) on the basis of the common heating specification to heat the first exhaust gas purification device (1) and the second exhaust gas purification device (2).

2. Method according to claim 1,
**characterized in that**
the heating specification is created by means of the heating coordination device (8) by taking into account a first pressure measured on the first exhaust gas purification device (1) by means of a first pressure measuring device (10) and/or a second pressure measured on the second exhaust gas purification device (2) by means of a second pressure measuring device (11).

3. Method according to claim 1 or 2,
**characterized in that**
when creating the heating specification, a heating strategy is selected from a list of predefined heating strategies by means of the heating coordination device (8) on the basis of the first heat demand and the second heat demand.

4. Method according to claim 3,
**characterized in that**
the selected heating strategy is modified to the first heat demand and/or the second heat demand by means of the heating coordination device (8).

5. Method according to any of the preceding claims,
**characterized in that**
the heating coordination device (8) performs a prioritization process between the first heat demand and the second heat demand when creating the heating specification.

6. Method according to any of claims 1 to 5,
**characterized in that**
the heating coordination device (8) creates the heating specification in such a way that the first heat demand and the second heat demand are fully covered.

7. Method according to any of the preceding claims,
**characterized in that**
the first exhaust gas purification device (1) is a catalyst (12) and the second exhaust gas purification device (2) is a particulate filter (13).

8. Exhaust gas purification system (14) for purifying exhaust gases of an exhaust tract (3) of an internal combustion engine (4) of a motor vehicle (5), comprising a first exhaust gas purification device (1) for purifying the exhaust gases, a second exhaust gas purification device (2) for purifying the exhaust gases, a first temperature measuring device (6) for determining a first actual temperature of the first exhaust gas purification device (1) by way of contact at a point where a temperature is relevant for the operation of the first exhaust gas purification device (1), and a second temperature measuring device (7) for determining a second actual temperature of the second exhaust gas purification device (2) by way of contact at a point where a temperature is relevant for the operation of the second exhaust gas purification device (2),
**characterized in that**
the exhaust gas purification system (14) has a heating coordination device (8) for ascertaining a first target temperature of the first exhaust gas purification device (1) and a second target temperature of the second exhaust gas purification device (2), for ascertaining a first heat demand of the first exhaust gas purification device (1) by calculating the difference between the first target temperature and the measured first actual temperature and a second heat demand of the second exhaust gas purification device (2) by calculating the difference between the first target temperature and the measured first actual temperature, taking into account additional heat losses due to convection and the performance characteristics of the internal combustion engine (4) in order to ascertain a heat demand which is achievable within the technical capabilities of the internal combustion engine, for creating a common heating specification for the first exhaust gas purification device (1) and for the second exhaust gas purification device (2) on the basis of the first heat demand of the first exhaust gas purification device (1) and the second heat demand of the second exhaust gas purification device (2), the common heating specification defining a target temperature or a target temperature profile of the exhaust gas of the internal combustion engine (4), and for forwarding the common heating specification to an engine control device (9) for controlling the internal combustion engine (4) of the motor vehicle (5).

9. Exhaust gas purification system (14) according to claim 8,
**characterized in that**
the first exhaust gas purification device (1) is designed as a catalyst (12) and the second exhaust gas purification device (2) is designed as a particulate filter (13).

10. Motor vehicle (5) comprising an internal combustion engine (4) and an exhaust tract (3) arranged on the internal combustion engine (4), the motor vehicle (5) comprising an engine control device (9) for controlling the internal combustion engine (4),
**characterized in that**
the motor vehicle (5) comprises an exhaust gas purification system (14) according to claim 8 or 9, which is arranged on the exhaust tract (3).

## Revendications

1. Procédé permettant le chauffage d'un premier dispositif d'épuration des gaz d'échappement (1) et d'un second dispositif d'épuration des gaz d'échappement (2) d'un circuit de gaz d'échappement (3) d'un moteur à combustion interne (4) d'un véhicule automobile (5), présentant les étapes suivantes :
- détermination d'une première température réelle du premier dispositif d'épuration des gaz d'échappement (1) au moyen d'un premier dispositif de mesure de température (6) par l'intermédiaire d'un contact au niveau d'un point où une température est importante pour le fonctionnement du premier dispositif d'épuration des gaz d'échappement (1),
- détermination d'une seconde température réelle du second dispositif d'épuration des gaz d'échappement (2) au moyen d'un second dispositif de mesure de température (7) par l'intermédiaire d'un contact au niveau d'un point où une température est importante pour le fonctionnement du second dispositif d'épuration des gaz d'échappement (2),
- établissement d'une première température cible du premier dispositif d'épuration des gaz d'échappement (1) ainsi que d'une seconde température cible du second dispositif d'épuration des gaz d'échappement (2) au moyen d'un dispositif de coordination de chauffage (8),
- établissement d'un premier besoin en chaleur du premier dispositif d'épuration des gaz d'échappement (1) en calculant une différence entre la première température cible et la première température réelle mesurée, ainsi que d'un second besoin en chaleur du second dispositif d'épuration des gaz d'échappement (2) en calculant une différence entre la seconde température cible et la seconde température réelle mesurée au moyen du dispositif de coordination de chauffage (8), dans lequel l'établissement du premier besoin en chaleur et du second besoin en chaleur est effectué en prenant en compte des pertes de chaleur supplémentaires par convection et des caractéristiques de performance du moteur à combustion interne (4) afin d'établir un besoin en chaleur, réalisable dans les limites des possibilités techniques du moteur à combustion interne, pour la fourniture de la chaleur des gaz d'échappement,
- spécification d'une consigne de chauffage commune pour le premier dispositif d'épuration des gaz d'échappement (1) et pour le second dispositif d'épuration des gaz d'échappement (2) en fonction du premier besoin en chaleur du premier dispositif d'épuration des gaz d'échappement (1) et du second besoin en chaleur du second dispositif d'épuration des gaz d'échappement (2) au moyen du dispositif de coordination de chauffage (8), dans lequel la consigne de chauffage définit une température cible ou une courbe de température cible des gaz d'échappement du moteur à combustion interne (4),
- transmission de la consigne de chauffage commune à un dispositif de commande de moteur (9) du véhicule automobile (5) permettant la commande du moteur à combustion interne (4) du véhicule automobile (5) au moyen du dispositif de coordination de chauffage (8), et
- commande du moteur à combustion interne (4) au moyen du dispositif de commande de moteur (9) en fonction de la consigne de chauffage commune pour le chauffage du premier dispositif d'épuration des gaz d'échappement (1) et du second dispositif d'épuration des gaz d'échappement (2).

2. Procédé selon la revendication 1,
**caractérisé en ce**
**que** la consigne de chauffage est spécifiée au moyen du dispositif de coordination de chauffage (8) en prenant en compte une première pression mesurée au niveau du premier dispositif d'épuration des gaz d'échappement (1) au moyen d'un premier dispositif de mesure de pression (10) et/ou une seconde pression mesurée au niveau du second dispositif d'épuration des gaz d'échappement (2) au moyen d'un second dispositif de mesure de pression (11).

3. Procédé selon la revendication 1 ou 2,
**caractérisé en ce**
**que**, lors de la spécification de la consigne de chauffage, une stratégie de chauffage est sélectionnée au moyen du dispositif de coordination de chauffage (8), sur la base du premier besoin en chaleur et du second besoin en chaleur, à partir d'une liste de stratégies de chauffage prédéfinies.

4. Procédé selon la revendication 3,
**caractérisé en ce**
**que** la stratégie de chauffage sélectionnée est modifiée, au moyen du dispositif de coordination de chauffage (8), en fonction du premier besoin en chaleur et/ou du second besoin en chaleur.

5. Procédé selon l'une des revendications précédentes,
**caractérisé en ce**
**que** le dispositif de coordination de chauffage (8) applique, lors de la spécification de la consigne de chauffage, une hiérarchisation entre le premier besoin en chaleur et le second besoin en chaleur.

6. Procédé selon l'une des revendications 1 à 5,
**caractérisé en ce**
**que** le dispositif de coordination de chauffage (8) spécifie la consigne de chauffage de telle sorte que le premier besoin en chaleur et le second besoin en chaleur sont entièrement couverts.

7. Procédé selon l'une des revendications précédentes,
**caractérisé en ce**
**que** le premier dispositif d'épuration des gaz d'échappement (1) est un catalyseur (12) et le second dispositif d'épuration des gaz d'échappement (2) est un filtre à particules (13).

8. Système d'épuration des gaz d'échappement (14) permettant l'épuration de gaz d'échappement d'un circuit de gaz d'échappement (3) d'un moteur à combustion interne (4) d'un véhicule automobile (5), présentant un premier dispositif d'épuration des gaz d'échappement (1) permettant l'épuration des gaz d'échappement, un second dispositif d'épuration des gaz d'échappement (2) permettant l'épuration des gaz d'échappement, un premier dispositif de mesure de température (6) permettant la détermination d'une première température réelle du premier dispositif d'épuration des gaz d'échappement (1) par l'intermédiaire d'un contact au niveau d'un point où une température est importante pour le fonctionnement du premier dispositif d'épuration des gaz d'échappement (1), et un second dispositif de mesure de température (7) permettant la détermination d'une seconde température réelle du second dispositif d'épuration des gaz d'échappement (2) par l'intermédiaire d'un contact au niveau d'un point où une température est importante pour le fonctionnement du second dispositif d'épuration des gaz d'échappement (2),
**caractérisé en ce**
**que** le système d'épuration des gaz d'échappement (14) présente un dispositif de coordination de chauffage (8) permettant l'établissement d'une première température cible du premier dispositif d'épuration des gaz d'échappement (1) et d'une seconde température cible du second dispositif d'épuration des gaz d'échappement (2), l'établissement d'un premier besoin en chaleur du premier dispositif d'épuration des gaz d'échappement (1) en calculant une différence entre la première température cible et la première température réelle mesurée, et d'un second besoin en chaleur du second dispositif d'épuration des gaz d'échappement (2) en calculant une différence entre la première température cible et la première température réelle mesurée, ainsi qu'en prenant respectivement en compte des pertes de chaleur supplémentaires par convection et des caractéristiques de performance du moteur à combustion interne (4) afin d'établir un besoin en chaleur réalisable dans les limites des possibilités techniques du moteur à combustion interne, la spécification d'une consigne de chauffage commune pour le premier dispositif d'épuration des gaz d'échappement (1) et pour le second dispositif d'épuration des gaz d'échappement (2) en fonction du premier besoin en chaleur du premier dispositif d'épuration des gaz d'échappement (1) et du second besoin en chaleur du second dispositif d'épuration des gaz d'échappement (2), dans lequel la consigne de chauffage commune définit une température cible ou une courbe de température cible des gaz d'échappement du moteur à combustion interne (4), ainsi que la transmission de la consigne de chauffage commune à un dispositif de commande de moteur (9) permettant la commande du moteur à combustion interne (4) du véhicule automobile (5).

9. Système d'épuration des gaz d'échappement (14) selon la revendication 8,
**caractérisé en ce**
**que** le premier dispositif d'épuration des gaz d'échappement (1) est réalisé sous forme de catalyseur (12) et le second dispositif d'épuration des gaz d'échappement (2) est réalisé sous forme de filtre à particules (13).

10. Véhicule automobile (5), présentant un moteur à combustion interne (4) et un circuit de gaz d'échappement (3) disposé au niveau du moteur à combustion interne (4), dans lequel le véhicule automobile (5) présente un dispositif de commande de moteur (9) permettant la commande du moteur à combustion interne (4),
**caractérisé en ce**
**que** le véhicule automobile (5) présente un système d'épuration des gaz d'échappement (14) selon la revendication 8 ou 9, lequel est disposé au niveau du circuit de gaz d'échappement (3).
